# FASCICULE DE BREVET EUROPEEN

(11) **EP 3 720 637 B1**
(45) Date de publication et mention de la délivrance du brevet: **10.04.2024**
(21) Numéro de dépôt: 18811027.4
(22) Date de dépôt: 30.11.2018
(51) Int. Cl.: B23B 27/10, B23B 29/034, B23B 51/06, B23B 51/00

(54) **TÊTE D'ALÉSAGE**
KOPF ZUM AUFBOHREN
BORING HEAD

(30) Priorité: 05.12.2017 FR 1761658
(43) Date de publication de la demande: 14.10.2020
(73) Titulaire: SECO Tools Tooling Systems, 67330 Bouxwiller (FR)
(72) Inventeur: JAEGER, Claude, 67700 Monswiller (FR); HOPFNER, Sébastien, 67440 Thal Marmoutier (FR)
(74) Mandataire: Sandvik
(86) Numéro de dépôt international: PCT/EP2018/083222
(87) Numéro de publication internationale: WO 2019/110452

(56) Documents cités:
- EP-A2- 2 140 960
- WO-A1-2017/089544
- WO-A2-98/39127
- CN-B- 105 436 578
- DE-A1- 10 144 241
- DE-A1-102005 034 422
- DE-A1-102012 001 732
- FR-A1- 2 359 668

## Description

La présente invention concerne une tête d'alésage selon le préambule de la revendication 1 et se rapporte au domaine des mécanismes de lubrification de tête d'alésage et plus particulièrement au domaine des mécanismes de lubrification de tête d'alésage comprenant une plaquette de coupe amovible. Une telle tête d'alésage est connue de WO 98/39127 A2.

Actuellement, il est courant d'opérer une lubrification ou un refroidissement d'une tête d'alésage par l'intermédiaire d'un liquide projeté au niveau de la surface de coupe de la tête d'alésage.

Un mécanisme classiquement mis en oeuvre pour réaliser cette lubrification ou ce refroidissement consiste en un conduit disposé dans l'épaisseur de la tête d'alésage et dont l'orifice débouche à proximité de la surface de coupe. Le conduit réalisé dans l'épaisseur de la tête d'alésage forme ainsi un dispositif d'alimentation en liquide de lubrification ou de refroidissement pour être projeté au niveau de la surface de coupe.

Toutefois, il arrive que la position de l'orifice du conduit d'alimentation soit conditionnée par l'architecture spécifique de la partie de la tête d'alésage qui porte la surface de coupe et que la qualité de la projection sur la surface de coupe en soit affectée.

De même, la projection de liquide de lubrification ou de refroidissement sur la surface de coupe est opérée au niveau d'un point particulier de la surface de coupe. Cependant, lorsque la surface de coupe de la plaquette présente une longueur plus importante que le seul point d'impact du liquide sur la plaquette, le refroidissement sur l'ensemble de la surface de coupe se trouve alors réalisée par des projections secondaires ou un écoulement du liquide. La qualité du refroidissement ou de la lubrification s'en trouve alors impacté.

De façon similaire, lorsque la plaquette de coupe est montée amovible, c'est-à-dire déplaçable ou réglable en position sur la tête d'alésage, la surface de coupe ou le point de coupe se trouve modifié en conséquence. Aussi, l'orifice du conduit d'alimentation en liquide de lubrification ou de refroidissement étant fixe, le point d'impact du liquide projeté sur la plaquette est modifié et de sorte que l'orifice ne permet plus une projection de liquide au niveau d'un point de la surface de coupe permettant un refroidissement ou une lubrification optimisée de la plaquette d'alésage.

La présente invention a pour but de pallier cet inconvénient en proposant un mécanisme permettant une optimisation de la lubrification ou du refroidissement de la surface de coupe d'une tête d'alésage, tout en étant conservant une lubrification optimisée quelle que soit la position de la surface de coupe lorsque celle-ci est amovible sur la tête d'alésage. L'invention a ainsi pour objet une tête d'alésage selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

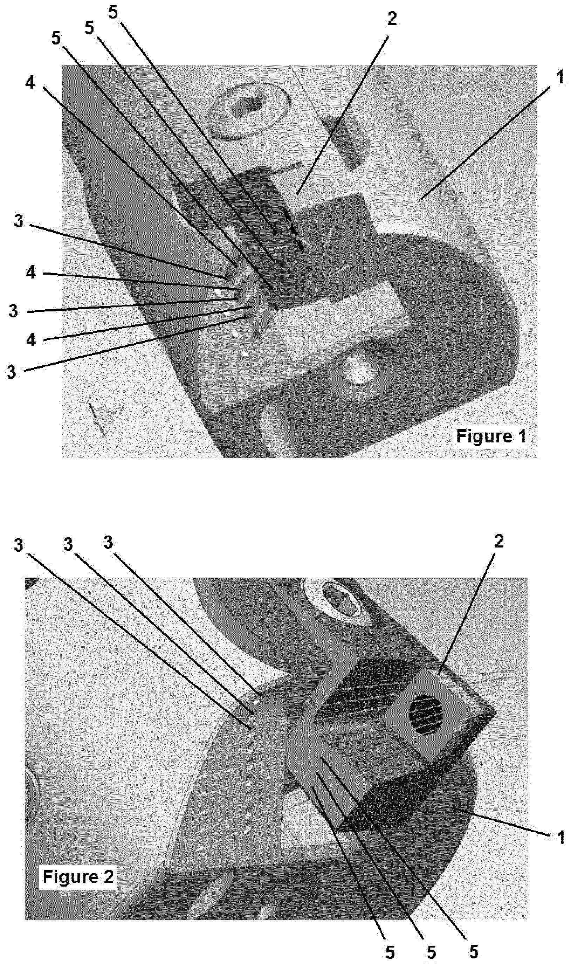

- la figure 1 est une représentation schématique d'un premier exemple de construction d'une tête d'alésage selon l'invention,
- la figure 2 est une représentation schématique d'un second exemple de construction d'une tête d'alésage selon l'invention.

Les formes de réalisation préférentielles de l'invention sont définies dans les revendications dépendantes.

De façon complémentaire, le dispositif comporte au moins trois orifices 3.

La tête d'alésage de l'invention qui comprend une pluralité d'orifices 3 à sa surface au niveau de la plaquette 2 qui réalise la surface de coupe permet une multiplication, d'une part, des angles de projection de liquide et, d'autre part, des points de projection de liquide sur la surface d coupe. Cette multiplication des projections de liquide sur la plaquette 2 conduit à une optimisation de la répartition du liquide de refroidissement ou de lubrification sur la surface de coupe. La multiplication des points d'impact de la projection de liquide sur la plaquette 2 permet une répartition de liquide de refroidissement sur une longueur ou une surface plus importante par rapport à une projection de liquide opérée depuis un orifice 3 unique.

Selon une particularité de construction de l'invention, la tête d'alésage 1 est caractérisée en ce que les au moins deux orifices 3 sont positionnés à des hauteurs différentes du bord de coupe de la plaquette 2 de coupe. Une telle construction permet ainsi une optimisation de la répartition du liquide de refroidissement ou de lubrification le long du bord de coupe de la plaquette 2.

Selon une autre particularité complémentaire de construction de l'invention, la tête d'alésage 1 est caractérisée en ce que le dispositif pour le déplacement d'un liquide comprend au moins un conduit le long duquel les au moins deux orifices 3 sont positionnés. Selon cette particularité de construction, l'alimentation des orifices 3 est réalisée par une même portion d'un conduit unique. Il convient de noter que, bien que cette construction soit facile à mettre en oeuvre, la pression du liquide en sortie d'orifice 3 présente une décroissance entre l'orifice 3 le plus en amont du flux de liquide dans le conduit et l'orifice 3 le plus en aval. Toutefois, lorsque les au moins deux orifices 3 sont suffisamment rapprochés, cette variation de pression est susceptible d'être négligeable au niveau de la qualité de la projection du liquide sur la plaquette 2 de coupe.

Selon une autre particularité complémentaire de construction, la tête d'alésage 1 selon l'invention est caractérisée en ce que le dispositif pour le déplacement d'un liquide comprend un conduit principal qui se subdivise en au moins deux conduits secondaires, chaque conduit secondaire comportant au moins un orifice 3 respectif, de sorte que ces orifices 3 respectifs correspondent aux au moins deux orifices 3. Selon cette particularité de construction, l'alimentation de chacun des orifices 3 est réalisée par un conduit respectif. Il convient de noter que, bien que l'architecture d'une telle construction soit plus complexe à mettre en oeuvre que celle avec un conduit unique, une ramification de plusieurs conduits secondaires à partir d'un conduit principal permet d'obtenir une projection de liquide en sortie d'orifices 3 qui soit exercée avec une pression sensiblement identique entre les différents orifices 3. Aussi, la projection de liquide en sortie d'orifices 3 est homogénéisée sur l'ensemble de la plaquette 2 de coupe.

La tête d'alésage 1 selon l'invention est telle que, la plaquette 2 de coupe étant montée déplaçable sur la tête d'alésage 1, les au moins deux orifices 3 sont disposés le long d'un axe sensiblement parallèle à l'axe de déplacement de la plaquette 2 de coupe. Ainsi, la projection de liquide de lubrification ou de refroidissement est opérée sur l'ensemble de la course de déplacement en réglage de la plaquette 2 de coupe. Aussi, quel que soit la position de réglage de la plaquette 2 de coupe, le liquide de lubrification ou de refroidissement est projeté de façon optimale sur la surface de coupe en fonctionnement.

Selon une autre particularité complémentaire de construction, la tête d'alésage 1 selon l'invention est caractérisée en ce que, au niveau d'au moins un orifice 3, la surface de la tête d'alésage 1 comprend une rainure 4 orientée depuis l'orifice 3 en direction d'au moins une position de la plaquette 2 de coupe. Selon cette particularité de construction, la rainure 4 réalise une gorge formée à la surface de la tête d'alésage 1. De façon préférée, cette rainure 4 est disposée selon un axe 5 correspondant sensiblement à un axe 5 perpendiculaire au plan de l'orifice 3. Cette rainure 4 permet d'optimiser le guidage du flux de liquide projeté en sortie d'orifice 3 contre la plaquette 2 de coupe.

Selon une spécificité de cette particularité de construction, la tête d'alésage 1 selon l'invention est caractérisée en ce que, la tête d'alésage 1 comprenant au moins deux rainures 4 orientées depuis au moins deux orifices 3 respectifs, les au moins deux rainures 4 sont orientées selon des axes 5 sensiblement parallèles entre eux. Cette spécificité permet ainsi d'optimiser l'orientation et le guidage du flux de liquide projeté au niveau d'une pluralité de points de l'ensemble d'une longueur correspondant à au moins une partie de la plaquette 2 de coupe.

Selon une spécificité alternative de cette particularité de construction ou partiellement complémentaire de la spécificité précédemment décrite, la tête d'alésage 1 selon l'invention est caractérisée en ce que, la tête d'alésage 1 comprenant au moins deux rainures 4 orientées depuis au moins deux orifices 3 respectifs, les au moins deux rainures 4 sont orientées selon des axes 5 qui réalisent une intersection à proximité d'une position de la plaquette 2 de coupe. Selon cette spécificité, les rainures 4 permettent de concentrer toute ou partie du flux de liquide au niveau d'un point particulier de la plaquette 2 de coupe. Cette concentration de la projection depuis des orifices 3 différents permet également une projection de liquide sur la plaquette 2 de coupe selon des angles différents et donc optimiser le refroidissement et/ou la lubrification de la plaquette 2 de coupe par rapport à une projection depuis un orifice unique.

Selon une autre particularité complémentaire de construction, la tête d'alésage 1 selon l'invention est caractérisée en ce que le dispositif pour permettre le déplacement d'un liquide est adaptée à l'écoulement d'un liquide de lubrification.

Selon une autre particularité complémentaire de construction, la tête d'alésage 1 selon l'invention est caractérisée en ce que le dispositif pour permettre le déplacement d'un liquide est adaptée à l'écoulement d'un liquide de refroidissement.

Bien entendu, l'invention n'est pas limitée au mode de réalisation décrit et représenté aux dessins annexés.

## Revendications

1. Tête d'alésage (1) comprenant une plaquette de coupe (2),
telle que la tête d'alésage (1) comprend, dans son épaisseur, au moins un dispositif pour permettre le déplacement d'un liquide, le dispositif comportant au moins deux orifices (3) à la surface de la tête d'alésage (1) et disposés au niveau de la plaquette (2), et telle que, la plaquette (2) de coupe est montée déplaçable sur la tête d'alésage (1),
**caractérisée en ce que** les au moins deux orifices (3) sont disposés le long d'un axe sensiblement parallèle à l'axe de déplacement de la plaquette (2) de coupe.

2. Tête d'alésage (1) selon la revendication 1, **caractérisée en ce que** les au moins deux orifices (3) sont positionnés à des hauteurs différentes du bord de coupe de la plaquette (2) de coupe.

3. Tête d'alésage (1) selon une des revendications 1 à 2, **caractérisée en ce que** le dispositif pour le déplacement d'un liquide comprend au moins un conduit le long duquel les au moins deux orifices (3) sont positionnés.

4. Tête d'alésage (1) selon une des revendications 1 à 3, **caractérisée en ce que** le dispositif pour le déplacement d'un liquide comprend un conduit principal qui se subdivise en au moins deux conduits secondaires, chaque conduit secondaire comportant au moins un orifice respectif, de sorte que ces orifices (3) respectifs correspondent aux au moins deux orifices (3).

5. Tête d'alésage (1) selon une des revendications 1 à 4, **caractérisée en ce que**, au niveau d'au moins un orifice, la surface de la tête d'alésage comprend une rainure orientée depuis l'orifice en direction d'au moins une position de la plaquette de coupe.

6. Tête d'alésage (1) selon la revendication 5, **caractérisée en ce que**, la tête d'alésage (1) comprenant au moins deux rainures (4) orientées depuis au moins deux orifices (3) respectifs, les au moins deux rainures (4) sont orientées selon des axes (5) sensiblement parallèles entre eux.

7. Tête d'alésage (1) selon la revendication 5, **caractérisée en ce que**, la tête d'alésage (1) comprenant au moins deux rainures (4) orientées depuis au moins deux orifices (3) respectifs, les au moins deux rainures (4) sont orientées selon des axes (5) qui réalisent une intersection à proximité d'une position de la plaquette (2) de coupe.

8. Tête d'alésage (1) selon une des revendications 1 à 7, **caractérisée en ce que** le dispositif pour permettre le déplacement d'un liquide est adaptée à l'écoulement d'un liquide de lubrification.

9. Tête d'alésage (1) selon une des revendications 1 à 8, **caractérisée en ce que** le dispositif pour permettre le déplacement d'un liquide est adaptée à l'écoulement d'un liquide de refroidissement.

## Patentansprüche

1. Bohrkopf (1) mit einem Schneideinsatz (2),
wobei der Bohrkopf (1) in seinem Körper wenigstens eine Einrichtung aufweist, um die Verdrängung einer Flüssigkeit zu ermöglichen, wobei die Einrichtung wenigstens zwei Öffnungen (3) an der Oberfläche des Bohrkopfes (1) aufweist und auf der Ebene der Schneidplatte (2) angeordnet ist, und wobei die Schneidplatte (2) verschiebbar an dem Bohrkopf (1) angebracht ist,
**dadurch gekennzeichnet, dass** die wenigstens zwei Öffnungen (3) entlang einer Achse angeordnet sind, die im Wesentlichen parallel zur Bewegungsachse des Schneideinsatzes (2) verläuft.

2. Bohrkopf (1) nach Anspruch 1, **dadurch gekennzeichnet, dass** die wenigstens zwei Öffnungen (3) in unterschiedlichen Höhen von der Schneidkante des Schneideinsatzes (2) positioniert sind.

3. Bohrkopf (1) nach einem der Ansprüche 1 bis 2, **dadurch gekennzeichnet, dass** die Einrichtung zum Verdrängen einer Flüssigkeit wenigstens eine Leitung umfasst, entlang derer die wenigstens zwei Öffnungen (3) positioniert sind.

4. Bohrkopf (1) nach einem der Ansprüche 1 bis 3, **dadurch gekennzeichnet, dass** die Einrichtung zum Verdrängen einer Flüssigkeit eine Hauptleitung umfasst, die sich in wenigstens zwei Nebenleitungen unterteilt, wobei jede Nebenleitung wenigstens eine jeweilige Öffnung aufweist, so dass diese jeweiligen Öffnungen (3) mit wenigstens zwei Öffnungen (3) korrespondieren.

5. Bohrkopf (1) nach einem der Ansprüche 1 bis 4, **dadurch gekennzeichnet, dass** auf der Ebene wenigstens einer Öffnung die Oberfläche des Bohrkopfs eine Nut aufweist, die von der Öffnung in Richtung wenigstens einer Position des Schneideinsatzes ausgerichtet ist.

6. Bohrkopf (1) nach Anspruch 5, **dadurch gekennzeichnet, dass** der Bohrkopf (1) wenigstens zwei Nuten (4) umfasst, die von wenigstens zwei jeweiligen Öffnungen (3) aus ausgerichtet sind, wobei die wenigstens zwei Nuten (4) entlang von Achsen (5) ausgerichtet sind, die im Wesentlichen parallel zueinander verlaufen.

7. Bohrkopf (1) nach Anspruch 5, **dadurch gekennzeichnet, dass** der Bohrkopf (1) wenigstens zwei Nuten (4) umfasst, die von wenigstens zwei jeweiligen Öffnungen (3) aus ausgerichtet sind, wobei die wenigstens zwei Nuten (4) entlang von Achsen (5) ausgerichtet sind, die in der Nähe einer Position des Schneideinsatzes (2) einen Schnittpunkt bilden.

8. Bohrkopf (1) nach einem der Ansprüche 1 bis 7, **dadurch gekennzeichnet, dass** die Einrichtung zum Ermöglichen der Verdrängung einer Flüssigkeit an den Fluss einer Schmierflüssigkeit angepasst ist.

9. Bohrkopf (1) nach einem der Ansprüche 1 bis 8, **dadurch gekennzeichnet, dass** die Einrichtung zum Ermöglichen der Verdrängung einer Flüssigkeit an den Fluss einer Kühlflüssigkeit angepasst ist.

## Claims

1. A boring head (1) comprising a cutting insert (2),
such that the boring head (1) comprises, in its body, at least one device for allowing the displacement of a liquid, the device comprising at least two openings (3) on the surface of the boring head (1) and arranged at the level of the insert (2), wherein the cutting insert (2) is mounted displaceably on the boring head (1),
**characterised in that** the at least two openings (3) are disposed along an axis substantially parallel to the axis of displacement of the cutting insert (2).

2. The boring head (1) according to claim 1, **characterised in that** the at least two openings (3) are positioned at different heights from the cutting edge of the cutting insert (2).

3. The boring head (1) according to one of claims 1 to 2, **characterised in that** the device for displacing a liquid comprises at least one conduit along which the at least two openings (3) are positioned.

4. The boring head (1) according to one of claims 1 to 3, **characterised in that** the device for the displacement of a liquid comprises a main conduit which subdivides into at least two secondary conduits, each secondary conduit having at least one respective opening, so that these respective openings (3) correspond to the at least two openings (3).

5. The boring head (1) according to one of claims 1 to 4, **characterised in that**, at at least one opening, the surface of the boring head comprises a groove oriented from the opening towards at least one position of the cutting insert.

6. The boring head (1) according to claim 5, **characterised in that**, the boring head (1) comprises at least two grooves (4) oriented from at least two respective openings (3), wherein the at least two grooves (4) are oriented along axes (5) substantially parallel to each other.

7. The boring head (1) according to claim 5, **characterised in that**, the boring head (1) comprises at least two grooves (4) oriented from at least two respective openings (3), wherein the at least two grooves (4) are oriented along axes (5) which intersect in the vicinity of a position of the cutting insert (2).

8. The boring head (1) according to one of claims 1 to 7, **characterised in that** the device for allowing the displacement of a liquid is adapted to the flow of a lubricating liquid.

9. The boring head (1) according to one of claims 1 to 8, **characterised in that** the device for allowing the displacement of a liquid is adapted to the flow of a cooling liquid.
